# FASCICULE DE BREVET EUROPEEN

(11) **EP 3 538 832 B1**
(45) Date de publication et mention de la délivrance du brevet: **30.12.2020**
(21) Numéro de dépôt: 17801087.2
(22) Date de dépôt: 09.11.2017
(51) Int. Cl.: F28F 3/04, F28F 3/06, F28D 9/00, B22F 3/105, B22F 5/00, F02C 7/08, F28F 21/08, F28D 21/00, B33Y 30/00

(54) **ECHANGEUR DE CHALEUR**
WÄRMETAUSCHER
HEAT EXCHANGER

(30) Priorité: 10.11.2016 FR 1660886
(43) Date de publication de la demande: 18.09.2019
(73) Titulaire: Safran, 75015 Paris (FR)
(72) Inventeur: TOUBIANA, Ephraïm, 77550 Moissy-Cramayel (FR)
(74) Mandataire: Gevers & Orès
(86) Numéro de dépôt international: PCT/FR2017/053059
(87) Numéro de publication internationale: WO 2018/087480

(56) Documents cités:
- WO-A2-2010/098666
- WO-A2-2010/098666
- CN-A- 104 776 736
- CN-A- 104 776 736

## Description

### DOMAINE TECHNIQUE

La présente invention concerne les échangeurs de chaleur en particulier pour une turbomachine.

### ETAT DE L'ART

Une turbomachine comprend un générateur de gaz comportant par exemple, d'amont en aval dans le sens d'écoulement des gaz, un ou plusieurs étages de compresseur, une chambre de combustion, un ou plusieurs étages de turbine, et une tuyère d'éjection des gaz d'échappement.

Un échangeur de chaleur est implanté dans une turbomachine pour permettre un transfert d'énergie thermique d'un fluide vers un autre.

Un tel échangeur de chaleur est par exemple utilisé pour le transfert d'énergie thermique des gaz chauds d'échappement vers un gaz destiné à être introduit en amont de la chambre de combustion, au bénéfice notamment de la consommation en carburant de la turbomachine. Cet échangeur de chaleur peut également être utilisé pour refroidir le lubrifiant (par exemple de l'huile) des différents moyens de guidage des rotors du générateur de gaz.

Un tel échangeur est par exemple obtenu par fabrication additive par fusion sélective sur lits de poudre communément désigné par l'acronyme anglais SLM pour « *Selective Laser Melting ».* Le principe de la fabrication additive SLM se base sur la fusion de fines couches en deux dimensions (2D) de poudre (métallique, plastique, céramique, etc.) à l'aide d'un laser de forte puissance. La technologie SLM a l'avantage de permettre la réalisation de pièces présentant des formes géométriques complexes et de bonnes caractéristiques mécaniques.

A performance aérothermique équivalente, les échangeurs de chaleur à ailettes sont particulièrement employés dans les turbomachines en raison notamment de leur faible masse.

Un tel échangeur de chaleur, entre un premier fluide (par exemple des gaz chauds d'échappement) s'écoulant suivant une direction longitudinale X et un deuxième fluide (par exemple de l'air), comprend par exemple deux plaques parallèles distantes l'une de l'autre de manière à définir un passage de circulation du premier fluide et une pluralité de rangées d'ailettes disposées perpendiculairement entre les plaques.

Plus précisément, les rangées d'ailettes s'étendent longitudinalement. Chaque ailette est délimitée longitudinalement par un bord d'attaque et un bord de fuite perpendiculaires aux plaques.

Une telle architecture présente notamment l'inconvénient d'entraîner une importante perte d'énergie mécanique du premier fluide en partie due à la présence d'une zone de recirculation dans l'écoulement au niveau de chacun des bords d'attaque des ailettes. Cette zone de recirculation étant d'autant plus importante du fait de la variation des sections de passage du premier fluide, à l'origine d'accélérations locales.

En outre, par fabrication SLM, dans une orientation verticale (plaques et ailettes perpendiculaires au support de construction), une telle architecture ne permet pas de respecter les tolérances dimensionnelles et géométriques souhaitées à l'issue de la fabrication. En effet, la fusion d'une couche en surplomb dont la normale est parallèle à la direction d'ajout des couches pose des difficultés de réalisation du fait notamment que seule la poudre non fusionnée sert de support lors de la fusion d'une telle couche en surplomb.

L'art antérieur comprend également les documents WO-A2-2010/098666 et CN-A-104776736.

Le document WO-A2-2010/098666 décrit un échangeur de chaleur entre un premier fluide s'écoulant suivant une direction longitudinale et un deuxième fluide, ledit échangeur comprenant : - deux plaques parallèles distantes l'une de l'autre de manière à définir un passage de circulation dudit premier fluide ; - au moins une première et une deuxième ailettes disposées perpendiculairement entre lesdites plaques, lesdites première et deuxième ailettes s'étendant longitudinalement, chaque ailette étant délimitée longitudinalement par un premier bord et un deuxième bord, ledit premier bord comprenant à seulement une de ses extrémités une zone de liaison avec la plaque correspondante ; la zone de liaison dudit premier bord étant inclinée d'un angle par rapport à une normale aux plaques dans un plan perpendiculaire auxdites plaques et parallèle à la direction.

L'objectif de la présente invention est ainsi de proposer, un échangeur de chaleur, à masse équivalente, présentant des caractéristiques aérothermiques améliorées, et respectant les tolérances dimensionnelles et géométriques souhaitées, lorsqu'il est obtenu par fabrication additive par fusion sélective sur lits de poudre.

### EXPOSE DE L'INVENTION

L'invention propose à cet effet un échangeur de chaleur entre un premier fluide s'écoulant suivant une direction longitudinale X et un deuxième fluide, ledit échangeur comprenant :
- deux plaques parallèles distantes l'une de l'autre de manière à définir un passage de circulation dudit premier fluide ;
- au moins une première et une deuxième rangée d'ailettes disposées perpendiculairement entre lesdites plaques, lesdites première et deuxième rangées s'étendant longitudinalement, les ailettes de ladite première rangée étant disposées de préférence en quinconce par rapport aux ailettes de ladite deuxième rangée, chaque ailette étant délimitée longitudinalement par un premier bord et un deuxième bord, ledit premier bord comprenant à chacune de ses extrémités une zone de liaison avec la plaque correspondante ;
   caractérisé en ce que lesdites zones de liaison dudit premier bord sont respectivement inclinées d'un angle A et d'un angle B par rapport à une normale N aux plaques dans un plan P perpendiculaire auxdites plaques et parallèle à la direction X, ledit premier bord et ledit deuxième bord de chacune des ailettes présentant un profil identique dans ledit plan P.

De telles caractéristiques géométriques associées aux ailettes permettent, à masse équivalente, non seulement d'améliorer significativement les performances aérothermiques de l'échangeur mais également de respecter les tolérances dimensionnelles et géométriques souhaitées, lorsqu'il est obtenu par fabrication additive par fusion sélective sur lits de poudre.

En effet, d'une part, de telles caractéristiques géométriques permettent de réduire significativement la zone de recirculation dans l'écoulement au niveau de chacun des bords d'attaque (premier bord ou deuxième bord en fonction du sens de l'écoulement) des ailettes, et par conséquent de réduire les pertes d'énergie mécanique. Cette réduction est d'autant plus importante du fait qu'il n'y pas de variation des sections de passage du premier fluide. En comparaison par rapport aux échangeurs de chaleur de l'art antérieur, on estime que la réduction des pertes de charge est de l'ordre de 15%.

D'autre part, pour la fabrication SLM, en positionnant le bord en creux du côté du support de construction si nécessaire, les zones de liaison constituent respectivement une première et une deuxième amorce de fabrication de l'ailette. Ainsi, au cours de la fabrication, il n'y a pas de couche en surplomb à fusionner et autrement dit la poudre non fusionnée n'est pas utilisée en tant que support, au bénéfice du respect des tolérances dimensionnelles et géométriques.

L'échangeur selon l'invention peut comprendre une ou plusieurs des caractéristiques suivantes, prises isolément les unes des autres ou en combinaison les unes avec les autres :
- l'angle A est égal à l'angle B ;
- l'angle A et/ou l'angle B est supérieur à 40°, et de préférence supérieur ou égal à 45° ;
- dans le plan P, plus de 90% de la longueur du premier bord est incliné par rapport à la normale N, et de préférence plus de 95% ;
- ledit premier bord comprend au moins un tronçon rectiligne incliné par rapport à la normale N et/ou au moins un tronçon circulaire et/ou au moins un tronçon elliptique ;
- ledit premier bord comprend deux tronçons rectilignes inclinés par rapport à la normale N et présentant des directions concourantes ;
- les ailettes sont espacées longitudinalement d'un pas constant.

L'invention a pour deuxième objet un procédé de réalisation d'un échangeur tel que décrit précédemment, dans lequel il comprend une étape de réalisation dudit échangeur par fabrication additive par fusion sélective sur lits de poudre suivant un axe de fabrication Z parallèle à ladite direction longitudinale X.

De manière alternative, lesdites ailettes comprennent chacune un premier bord en creux et un deuxième bord en saillie, l'échangeur étant fabriqué sur un support de construction, ledit premier bord en creux étant orienté du côté dudit support.

L'invention a pour troisième objet une turbomachine comprenant un échangeur de chaleur tel que décrit précédemment.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- les figures 1 et 2 sont des vues en perspective d'un échangeur de chaleur (à deux étages) selon l'invention, chaque étage comprenant deux plaques et une pluralité de rangées d'ailettes disposées entre les plaques, selon un premier mode de réalisation ;
- la figure 3 est une vue de détail d'une ailette de l'échangeur de chaleur des figures 1 et 2, dans un plan P ;
- la figure 4 est une vue en perspective d'un échangeur de chaleur, selon un deuxième mode de réalisation ;
- la figure 5 est une vue de détail d'une ailette de l'échangeur de chaleur de la figure 4, dans un plan P ;
- la figure 6 est une vue schématique d'une machine de réalisation d'un échangeur (ou d'un étage d'échangeur) selon l'invention, par fabrication additive ;
- les figures 7 à 10 sont des vues de détail, dans un plan P, similaires à celles des figures 3 et 5, et illustrent des variantes de réalisation des ailettes selon l'invention.

### DESCRIPTION DETAILLEE

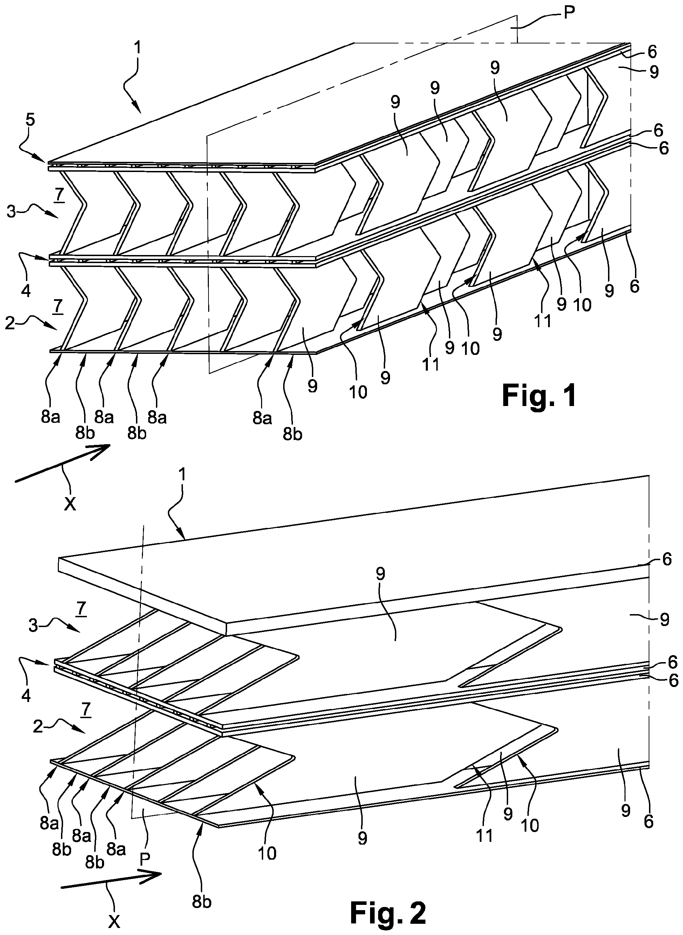

Sur les figures 1 et 2 est représenté un échangeur 1 de chaleur entre un premier fluide (par exemple des gaz chauds d'échappement) s'écoulant suivant une direction longitudinale X et un deuxième fluide (par exemple de l'air).

Plus précisément, l'échangeur 1 est étagé à savoir un premier et un deuxième étage 2, 3 de circulation du premier fluide. Une première voie 4 de circulation du deuxième fluide est ménagée entre les premier et deuxième étages 2, 3 (voie de circulation inter-étage). Une deuxième voie 5 de circulation du deuxième fluide (non représentée sur la figure 2) est ménagée sur le côté libre du deuxième étage 3.

L'exemple illustré n'est en rien limitatif, en fonction des besoins, l'échangeur 1 pourrait avoir un nombre N d'étages définissant chacun un passage de circulation du premier fluide, deux étages adjacents étant séparés par une voie de circulation du deuxième fluide.

A noter que l'écoulement du premier fluide suivant la direction longitudinale X peut être d'amont en aval (tel qu'illustré sur la figure 1) ou d'aval en amont.

Dans l'échangeur 1 de chaleur, il n'y a pas de mélange entre le premier et le deuxième fluide.

Chaque étage 2, 3 de l'échangeur 1 comprend deux plaques 6 parallèles distantes l'une de l'autre de manière à définir un passage 7 de circulation du premier fluide et une pluralité de rangées 8a, 8b (en l'occurrence dix) d'ailettes 9 conductrices de chaleur disposées perpendiculairement entre lesdites plaques 6.

Plus précisément, les rangées 8a, 8b s'étendent longitudinalement (suivant la direction X). Les ailettes 9 de deux rangées 8a, 8b adjacentes sont disposées en quinconce. Chaque ailette 9 est délimitée longitudinalement par un premier bord 10 et un deuxième bord 11, le premier bord 10 comprenant à chacune de ses extrémités une zone de liaison 12a, 12b avec la plaque 6 correspondante.

Les zones de liaison 12a, 12b du premier bord 10 sont respectivement inclinées d'un angle A et d'un angle B par rapport à une normale N aux plaques 6, dans un plan P perpendiculaire aux plaques 6 et parallèle à la direction X. Le premier bord 10 et le deuxième bord 11 de chacune des ailettes 9 présentent un profil identique, dans le plan P.

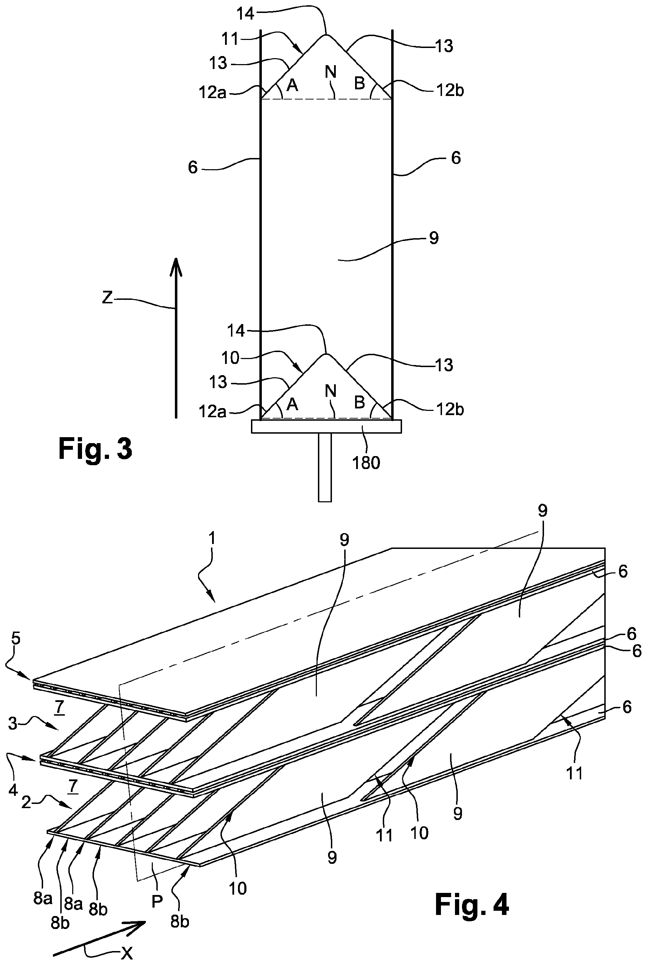

Selon le mode de réalisation illustré sur les figures 1 à 2 (respectivement sur le mode de réalisation de la figure 4), les ailettes 9 sont identiques (c'est-à-dire qu'elles présentent les même caractéristiques géométriques et dimensionnelles) et espacées longitudinalement d'un pas (ou écartement) constant. Sur une même rangée 8a, 8b, deux ailettes 9 consécutives sont espacées d'un intervalle équivalent à une ailette 9 (et plus précisément à la dimension longitudinale d'une ailette 9).

On entend par disposition en quinconce, une disposition répétitive, rangée à rangée, où une rangée sur deux, les ailettes 9 sont décalées de la moitié d'un pas par rapport aux rangées adjacentes.

En variante, le pas pourrait être variable ou l'échangeur 1 pourrait être divisé longitudinalement en portions, chaque portion présentant son propre pas.

En variante, les ailettes 9 de deux rangées 8a, 8b adjacentes pourraient se recouvrir partiellement, dans le plan P.

Au sens de l'invention, dans un plan P, lorsque la zone de liaison 12a est rectiligne, l'angle A (respectivement pour l'angle B) correspond à l'angle entre la zone de liaison 12a et la normale N.

Au sens de l'invention, dans un plan P, lorsque la zone de liaison 12a (respectivement zone de liaison 12b) est courbe, l'angle A (respectivement pour l'angle B) correspond à l'angle entre la tangente T à la zone de liaison 12a (au niveau d'un point situé à proximité de la plaque 6 correspondante) et la normale N.

Avantageusement, dans un plan P, plus de 90% de la longueur du premier bord 10 (respectivement du deuxième bord 11) est incliné par rapport à la normale N, et de préférence plus de 95%.

L'angle A et/ou l'angle B est supérieur à 40°, et de préférence supérieur ou égal à 45°.

Selon un premier mode de réalisation illustré sur les figures 1 à 3, pour chaque ailette 9, dans un plan P, le premier bord 10 (respectivement le deuxième bord 11) comprend deux tronçons rectilignes 13 inclinés par rapport à la normale N et présentant des directions concourantes.

Plus précisément, le premier bord 10 a une forme générale de V. Chacun des tronçons rectilignes 13 converge depuis la plaque 6 correspondante. Les deux tronçons rectilignes 13 sont joints par un congé 14 (forme concave). L'angle A est égal à l'angle B, et est égal à 45°.

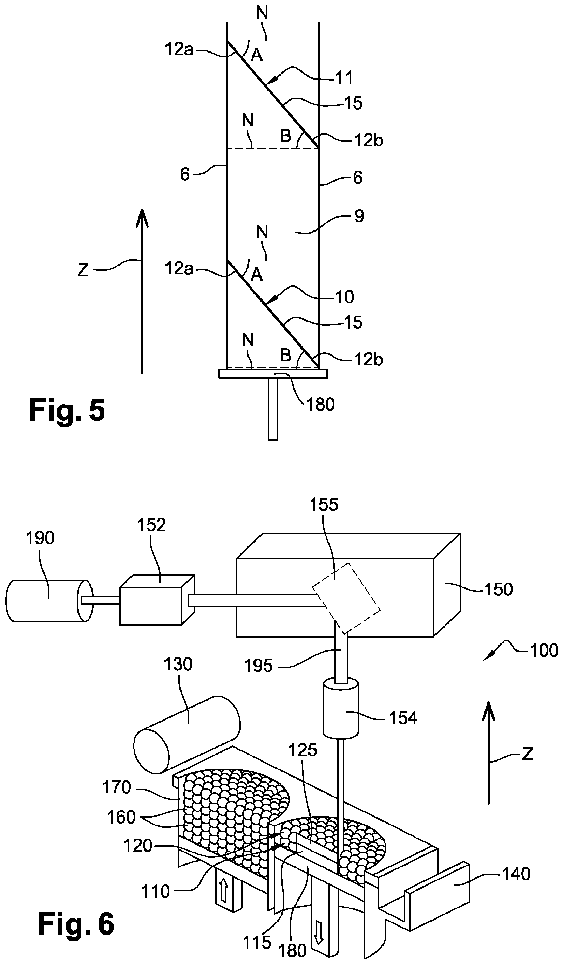

Selon un deuxième mode de réalisation illustré sur les figures 4 et 5, pour chaque ailette 9, dans un plan P, le premier bord 10 comprend un unique tronçon rectiligne 15 incliné par rapport à la normale N. Chaque ailette 9 a ainsi une forme de parallélogramme. L'angle A est égal à l'angle B, et est égal à 45°.

La figure 6 montre une machine 100 de fabrication d'un échangeur 1 de chaleur ou d'un étage 2, 3 de l'échangeur 1 par fabrication additive, et en particulier par fusion sélective de couches de poudre 160 par faisceau 195 de haute énergie.

L'échangeur 1 de chaleur (ou l'étage 2, 3 de l'échangeur 1) est avantageusement fabriqué suivant un axe de fabrication Z parallèle à la direction longitudinal X (plaques 6 et ailettes 9 perpendiculaires au support de construction 180) (voir les figures 3 et 5).

La machine 100 comprend un bac d'alimentation 170 contenant de la poudre 160 (métallique dans le cas présent), un rouleau 130 pour transvaser cette poudre 160 depuis le bac 170 et étaler une première couche 110 de cette poudre 160 sur un support de construction 180 mobile en translation suivant l'axe de fabrication Z (le support 180 peut être par exemple un plateau, une partie d'une autre pièce ou une grille).

La machine 100 comprend également un bac de recyclage 140 pour récupérer la poudre 160 en excès après étalement de la couche de poudre par le rouleau 130 sur le support de construction 180.

La machine 100 comprend en outre un générateur 190 de faisceau laser 195, et un système de pilotage 150 apte à diriger ce faisceau 195 sur l'ensemble du support de construction 180 de façon à fusionner les portions de poudre 160 souhaitées. La mise en forme du faisceau laser 195 et la variation de son diamètre sur le plan focal se font respectivement au moyen d'un dilatateur de faisceau 152 et d'un système de focalisation 154, l'ensemble constituant le système optique.

Plus précisément, le système de pilotage 150 comprend par exemple au moins un miroir 155 orientable sur lequel le faisceau laser 195 se réfléchit avant d'atteindre la couche de poudre 160. La position angulaire de ce miroir 155 est pilotée, par exemple, par une tête galvanométrique pour que le faisceau laser 195 balaye les portions souhaitées de la première couche 110 de poudre 160, suivant un profil préétabli.

L'échangeur 1 de chaleur (ou l'étage 2, 3 de l'échangeur 1) est fabriqué suivant l'axe de fabrication Z (parallèle à la direction X) (plaques 6 et ailettes 9 perpendiculaires au support de construction 180). Tel qu'illustré sur la figure 3, lorsque le profil des ailettes 9 comprend un bord en creux 10 et un bord en saillie 11, les bords en creux 10 doivent être orientés du côté du plateau de construction afin d'éviter toute couche en surplomb à fusionner.

La fabrication d'un échangeur 1 (ou d'un étage 2, 3 d'échangeur 1) à l'aide de la machine 100 comprend les étapes suivantes.

Une première couche 110 de poudre 160 est déposée sur le support de construction 180 à l'aide du rouleau 130. Au moins une portion de cette première couche 110 de poudre 160 est portée à une température supérieure à la température de fusion de cette poudre 160 par l'intermédiaire du faisceau laser 195 de sorte que les particules de poudre 160 de cette portion de la première couche 110 soient fondues et forment un premier cordon 115 d'un seul tenant, solidaire avec le support de construction 180.

Puis le support 180 est abaissé d'une hauteur correspondant à l'épaisseur déjà définie de la première couche 110. Une deuxième couche 120 de poudre 160 est déposée sur la première couche 110 et sur ce premier cordon 115, puis au moins une portion située partiellement ou complètement au-dessus de ce premier cordon 115 est chauffée par exposition au faisceau laser 195 de telle sorte que les particules de poudre 160 de cette portion de la deuxième couche 120 soient fondues, avec au moins une partie du premier élément 115, et forment un deuxième cordon 125. L'ensemble de ces deux cordons 115 et 125 forment un bloc d'un seul tenant.

Le processus de construction de la pièce est ensuite poursuivi couche par couche, en ajoutant des couches supplémentaires de poudre 160 sur l'ensemble déjà formé. Le balayage avec le faisceau 195 permet de construire chaque couche en lui donnant une forme en accord avec la géométrie de la pièce à réaliser.

L'échangeur 1 (ou l'étage 2, 3 de l'échangeur 1) en trois dimensions (3D) est donc obtenu par une superposition de couches en deux dimensions (2D), suivant l'axe de fabrication Z.

La poudre 160 est avantageusement dans un matériau présentant une bonne conductibilité thermique afin de maximiser les transferts thermiques entre le premier fluide et le deuxième fluide, et ainsi accroître le rendement de l'échangeur 1 de chaleur.

Avantageusement, la poudre 160 est métallique et de préférence en acier ou en en alliage métallique, par exemple à base nickel.

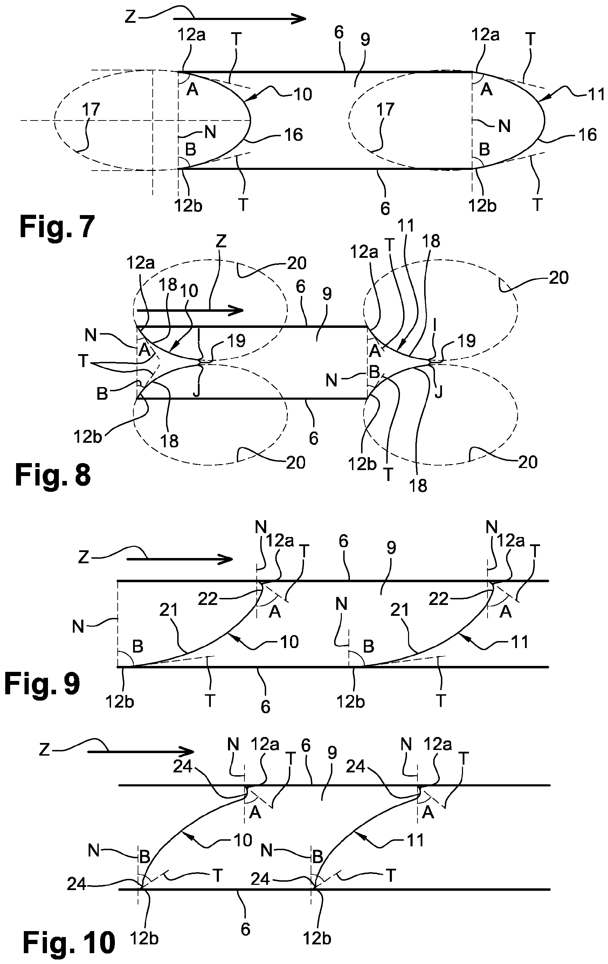

Les figures 7 à 10 illustrent différentes variantes de réalisation de l'invention.

Selon une première variante de réalisation représentée sur la figure 7, pour chaque ailette 9, dans un plan P, le premier bord 10 comprend un unique tronçon elliptique 16 concave. Le tronçon elliptique 16 correspond à un tronçon d'une ellipse 17 de construction (représenté en pointillés) dont le centre est situé à équidistance des deux plaques 6, décalé longitudinalement par rapport aux zones de liaison 12a, 12b, l'ellipse 17 de construction étant tangente aux plaques 6. Le tronçon elliptique 16 présente un angle au centre légèrement inférieur à 180°.

Selon une deuxième variante de réalisation représentée sur la figure 8, pour chaque ailette 9, dans un plan P, le premier bord 10 comprend deux tronçons elliptiques 18 convexes.

Plus précisément, chacun des tronçons elliptiques 18 converge depuis la plaque 6 correspondante. Les deux tronçons elliptiques 18 sont joints par un congé 19 (forme concave) de sorte à former un premier et un deuxième point d'inflexion I, J. Les tronçons elliptiques 18 correspondent chacun à un tronçon d'une ellipse 20 de construction (représenté en pointillés) présentant un angle au centre sensiblement égal à 90° (quartier d'ellipse). Ces ellipses 20 de construction sont superposées, alignées et présentent les mêmes caractéristiques dimensionnelles.

Selon une troisième variante de réalisation représentée sur la figure 9, pour chaque ailette 9, dans un plan P, le premier bord 10 comprend un unique tronçon elliptique 21 concave. Le tronçon elliptique 21 correspond à un tronçon d'ellipse présentant un angle au centre sensiblement égal à 90° (quartier d'ellipse) et est relié à l'une des plaques 6 via un congé 22 (forme concave).

Selon une quatrième variante de réalisation représentée sur la figure 10, pour chaque ailette 9, dans un plan P, le premier bord 10 comprend un unique tronçon circulaire 23 convexe. Le tronçon circulaire 23 correspond à un arc de cercle présentant un angle au centre sensiblement égal à 90° (quartier de cercle) et est relié aux plaques 6 via un congé 24 (forme concave).

Pour améliorer les performances mécaniques et aérothermiques, les arêtes vives peuvent être remplacées par des congés (forme concave) ou des arrondis (forme convexe).

Les différents modes de réalisation illustrés des ailettes 9 ne sont pas limitatifs. En effet, au sens de l'invention, le premier bord 10 peut contenir un ou plusieurs tronçons rectilignes et/ou un ou plusieurs tronçons courbes, toutefois, avantageusement, plus de 90% de la longueur du premier bord 10 (dans un plan P) (et respectivement du deuxième bord 11) est incliné par rapport à la normale N, et de préférence 95%.

## Revendications

1. Echangeur (1) de chaleur entre un premier fluide s'écoulant suivant une direction longitudinale (X) et un deuxième fluide, ledit échangeur (1) comprenant :
- deux plaques (6) parallèles distantes l'une de l'autre de manière à définir un passage (7) de circulation dudit premier fluide ;
- au moins une première et une deuxième rangée (8a, 8b) d'ailettes (9) disposées perpendiculairement entre lesdites plaques (6), lesdites première et deuxième rangées (8a, 8b) s'étendant longitudinalement, les ailettes (9) de ladite première rangée (8a) étant disposées de préférence en quinconce par rapport aux ailettes (9) de ladite deuxième rangée (8b), chaque ailette (9) étant délimitée longitudinalement par un premier bord (10) et un deuxième bord (11), ledit premier bord (10) comprenant à chacune de ses extrémités une zone de liaison (12a, 12b) avec la plaque (6) correspondante ;
lesdites zones (12a, 12b) de liaison dudit premier bord (10) étant respectivement inclinées d'un angle (A) et d'un angle (B) par rapport à une normale (N) aux plaques (6) dans un plan (P) perpendiculaire auxdites plaques (6) et parallèle à la direction (X), ledit premier bord (10) et ledit deuxième bord (11) de chacune des ailettes (9) présentant un profil identique dans ledit plan (P).

2. Echangeur selon la revendication 1, caractérisé en ce l'angle (A) est égal à l'angle (B).

3. Echangeur selon l'une des revendications précédentes, **caractérisé en ce que** l'angle (A) et/ou l'angle (B) est supérieur à 40°, et de préférence supérieur ou égal à 45°.

4. Echangeur selon l'une des revendications précédentes, **caractérisé en ce que**, dans le plan (P), plus de 90% de la longueur du premier bord (10) est incliné par rapport à la normale (N), et de préférence plus de 95%.

5. Echangeur selon l'une des revendications précédentes, **caractérisé en ce que** ledit premier bord (10) comprend au moins un tronçon rectiligne (13, 15) incliné par rapport à la normale (N) et/ou au moins un tronçon circulaire (23) et/ou au moins un tronçon elliptique (16, 18, 21).

6. Echangeur selon l'une des revendications 1 à 4, **caractérisé en ce que** ledit premier bord (10) comprend deux tronçons rectilignes (13) inclinés par rapport à la normale (N) et présentant des directions concourantes.

7. Echangeur selon l'une des revendications précédentes, **caractérisé en ce que** les ailettes (9) sont espacées longitudinalement d'un pas constant.

8. Procédé de réalisation d'un échangeur (1) selon l'une des revendications 1 à 7, dans lequel il comprend une étape de réalisation dudit échangeur (1) par fabrication additive par fusion sélective sur lits de poudre (160) suivant un axe de fabrication (Z) parallèle à ladite direction longitudinale (X).

9. Procédé selon la revendication 8, caractérisé que lesdites ailettes (9) comprennent chacune un premier bord en creux (10) et un deuxième bord en saillie (11), l'échangeur (1) étant fabriqué sur un support de construction (180), ledit premier bord en creux (10) étant orienté du côté dudit support (180).

10. Turbomachine comprenant un échangeur (1) de chaleur selon l'une des revendications 1 à 7.

## Patentansprüche

1. Wärmetauscher (1) zwischen einem ersten Fluid, das gemäß einer Längsrichtung (X) abfließt, und einem zweiten Fluid, wobei der Wärmetauscher (1) umfasst:
- zwei parallele Platten (6), die voneinander beabstandet sind, sodass sie einen Durchgang (7) für den Umlauf des ersten Fluids definieren;
- mindestens eine erste und eine zweite Reihe (8a, 8b) von Lamellen (9), die senkrecht zwischen den Platten (6) angeordnet sind, wobei sich die erste und zweite Reihe (8a, 8b) längs erstrecken, wobei die Lamellen (9) der ersten Reihe (8a) vorzugweise versetzt in Bezug auf die Lamellen (9) der zweiten Reihe (8b) angeordnet sind, wobei jede Lamelle (9) längs von einem ersten Rand (10) und einem zweiten Rand (11) begrenzt ist, wobei der erste Rand (10) an jeder seiner Extremitäten einen Verbindungsbereich (12a, 12b) mit der entsprechenden Platte (6) umfasst;
wobei die Verbindungsbereiche (12a, 12b) des ersten Rands (10) jeweils in einem Winkel (A) und in einem Winkel (B) in Bezug auf eine Normale (N) zu den Platten (6) geneigt sind, in einer Ebene (P) senkrecht zu den Platten (6) und parallel zu der Richtung (X), wobei der erste Rand (10) und der zweite Rand (11) jeder der Lamellen (9) ein identisches Profil in der Ebene (P) aufweisen.

2. Wärmetauscher nach Anspruch 1, **dadurch gekennzeichnet, dass** der Winkel (A) gleich dem Winkel (B) ist.

3. Wärmetauscher nach einem der vorstehenden Ansprüche, **dadurch gekennzeichnet, dass** der Winkel (A) und/oder der Winkel (B) größer sind als 40° und vorzugsweise größer als oder gleich 45°.

4. Wärmetauscher nach einem der vorstehenden Ansprüche, **dadurch gekennzeichnet, dass** in der Ebene (P) mehr als 90 % der Länge des ersten Rands (10) in Bezug auf die Normale (N) geneigt ist und vorzugweise mehr als 95 %.

5. Wärmetauscher nach einem der vorstehenden Ansprüche, **dadurch gekennzeichnet, dass** der erste Rand (10) mindestens einen geradlinigen Abschnitt (13, 15), der in Bezug auf die Normale (N) geneigt ist, und/oder mindestens einen kreisrunden Abschnitt (23) und/oder mindestens einen elliptischen Abschnitt (16, 18, 21) umfasst.

6. Wärmetauscher nach einem der Ansprüche 1 bis 4, **dadurch gekennzeichnet, dass** der erste Rand (10) zwei geradlinige Abschnitte (13) umfasst, die in Bezug auf die Normale (N) geneigt sind und zusammenlaufende Richtungen aufweisen.

7. Wärmetauscher nach einem der vorstehenden Ansprüche, **dadurch gekennzeichnet, dass** die Lamellen (9) in konstantem Abstand längs voneinander beabstandet sind.

8. Verfahren zur Herstellung eines Wärmetauschers (1) nach einem der Ansprüche 1 bis 7, wobei es einen Schritt zur Herstellung des Wärmetauschers (1) durch additive Fertigung durch selektives Schmelzen auf Pulverbetten (160) gemäß einer Fertigungsachse (Z) parallel zu der Längsrichtung (X) umfasst.

9. Verfahren nach Anspruch 8, **dadurch gekennzeichnet, dass** die Lamellen (9) jeweils einen ersten ausgesparten Rand (10) und einen zweiten vorspringenden Rand (11) umfassen, wobei der Wärmetauscher (1) auf einem Konstruktionsträger (180) gefertigt wird, wobei der erste ausgesparte Rand (10) auf die Seite des Trägers (180) ausgerichtet ist.

10. Turbomaschine, umfassend einen Wärmetauscher (1) nach einem der Ansprüche 1 bis 7.

## Claims

1. Heat exchanger (1) between a first fluid flowing in a longitudinal direction (X) and a second fluid, said exchanger (1) comprising:
- two parallel plates (6) distant from one another, so as to define a passage (7) for circulating said first fluid;
- at least one first and one second row (8a, 8b) of fins (9) arranged perpendicularly between said plates (6), said first and second rows (8a, 8b) extending longitudinally, the fins (9) of said first row (8a) being arranged preferably in staggered rows with respect to the fins (9) of said second row (8b), each fin (9) being delimited longitudinally by a first edge (10) and a second edge (11), said first edge (10) comprising, at each of the ends thereof, a region of connection (12a, 12b) with the corresponding plate (6);
said regions (12a, 12b) of connection of said first edge (10) being respectively inclined by an angle (A) and an angle (B) with respect to a normal (N) to the plates (6) in a plane (P) perpendicular to said plates (6) and parallel with the direction (X), said first edge (10) and said second edge (11) of each of the fins (9) having an identical profile in said plane (P).

2. Exchanger according to claim 1, **characterised in that** this angle (A) is equal to the angle (B).

3. Exchanger according to any of the preceding claims, **characterised in that** the angle (A) and/or the angle (B) is greater than 40°, and preferably greater than or equal to 45°.

4. Exchanger according to any of the preceding claims, **characterised in that**, in the plane (P), more than 90% of the length of the first edge (10) is inclined with respect to the normal (N), and preferably more than 95%.

5. Exchanger according to any of the preceding claims, **characterised in that** said first edge (10) comprises at least one rectilinear section (13, 15) inclined with respect to the normal (N) and/or at least one circular section (23) and/or at least one elliptical section (16, 18, 21).

6. Exchanger according to any of claims 1 to 4, **characterised in that** said first edge (10) comprises two rectilinear sections (13) inclined with respect to the normal (N) and having concurrent directions.

7. Exchanger according to any of the preceding claims, **characterised in that** the fins (9) are spaced longitudinally by a constant amount.

8. Method for producing an exchanger (1) according to any of claims 1 to 7, wherein it comprises a step of producing said exchanger (1) by additive manufacturing by selective melting on powder beds (160) along a manufacturing axis (Z) parallel with said longitudinal direction (X).

9. Method according to claim 8, **characterised in that** said fins (9) each comprise a first hollow edge (10) and a second protruding edge (11), the exchanger (1) being manufactured on a construction support (180), said first hollow edge (10) being oriented on the side of said support (180).

10. Turbine engine comprising a heat exchanger (1) according to any of claims 1 to 7.
